**Europäisches Patentamt**

**European Patent Office**

**Office européen des brevets**

(11) Veröffentlichungsnummer: **0 165 506**
**A1**

## (12) EUROPÄISCHE PATENTANMELDUNG

(21) Anmeldenummer: **85106435.2**

(22) Anmeldetag: **24.05.85**

(51) Int. Cl.⁴: **B 65 G 43/00**

(30) Priorität: **16.06.84 DE 3422450**

(43) Veröffentlichungstag der Anmeldung:
**27.12.85 Patentblatt 85/52**

(84) Benannte Vertragsstaaten:
**AT BE CH DE FR GB IT LI LU NL SE**

(71) Anmelder: **Dr. Arnold Schäfer GmbH**
**Hilgenbacher Höhe**
**D-6632 Saarwellingen 3(DE)**

(72) Erfinder: **Spaniol, Werner**
**Wiesbacher Strasse 45b**
**D-6689 Uchtelfangen(DE)**

(74) Vertreter: **Bernhardt, Winfrid, Dr.-Ing.**
**Kobenhüttenweg 43**
**D-6600 Saarbrücken(DE)**

(54) **Vorrichtung zur Bewegungsüberwachung eines Förderbandes.**

(57) Zur Drehzahlüberwachung läuft an einer Förderbandrolle (1) ein Impulserzeuger (11) mit um, dem ein feststehender Sensor und Impulsgeber (13) für ein Überwachungsgerät zugeordnet ist.

Der Impulserzeuger (11) ist an einer Bandrolle eines eine Mehrzahl von Bandrollen aufweisenden Bandträgers angeordnet, und zwar an einer zurückversetzten Stirnwand (5) der Bandrolle (1). In dem durch die Zurückversetzung entstandenen, von dem Rollenmantel (6) umschlossenen Raum (12) ist der Sensor und Impulsgeber (13) angeordnet und mittels einer Halterung (14) auf der Rollenachse (2) befestigt.

Eine solche Einrichtung zur Drehzahlüberwachung ist wenig störanfällig und schnell, nötigenfalls bei laufendem Förderband, auswechselbar.

EP 0 165 506 A1

0165506

Kobenhüttenweg 43, 6600 Saarbrücken
Telefon (0681) 65000

Dr. Arnold Schäfer GmbH, D-6632 Saarwellingen 3
(Bundesrepublik Deutschland)

"Vorrichtung zur Bewegungsüberwachung eines Förderbandes"

---

Die Erfindung betrifft eine Vorrichtung zur Bewegungsüberwachung eines Förderbandes aus einem an einer Förderbandrolle mitumlaufenden, auf das magnetische und/oder elektrische Feld wirkenden Impulserzeuger und einem neben dessen Umlaufbahn feststehend angeordneten Sensor als Impulsgeber für ein an ihn angeschlossenes Überwachungsgerät zum Auslösen eines Signals und/oder zum Abschalten von Anlageteilen, insbesondere von zufördernden Förderbändern.

Solche Impulserzeuger und Sensoren und Impulsgeber sind für den Bergbau in eigensicherer Ausführung entwickelt worden, um drehende oder oszillierende Maschinenteile verschiedenster Art zu überwachen. An Förderbändern ist ihre Anordnung in der Weise bekannt, daß der Impulserzeuger an einer Umkehrrolle und der Sensor und Impulsgeber an dem die Umkehrrolle tragenden Gestell befestigt wird.

Ferner kennt man Bandwächter in Gestalt besonderer, allein zur Überwachung an das Band angedrückter Rollen mit eingebauten Schalteinrichtungen.

Beide Arten von Überwachungsvorrichtungen verlangen für Wartung und Montage einen großen Zeitaufwand, die erstere darüber hinaus ein zeitweiliges Stillsetzen des Förderbandes.

Der Erfindung liegt die Aufgabe zugrunde, einen Bandwächter zu schaffen, der einfach und schnell zu warten und zu montieren und im übrigen wenig störanfällig ist.

Gemäß der Erfindung wird dieser Zweck mit einer Vorrichtung der eingangs bezeichneten Art dadurch erfüllt, daß eine Rolle eines auf einem Bandquerschnitt eine Mehrzahl von Rollen aufweisenden Bandträgers eine nach innen zurückversetzte Stirnwand aufweist und daß an dieser der Impulserzeuger und in dem von dem Rollenmantel umschlossenen Raum vor ihr der Sensor und Impulsgeber angeordnet ist, der mittels einer Halterung auf der Rollenachse befestigt ist.

Eine Rolle eines auf einem Bandquerschnitt eine Mehrzahl von Rollen, in der Regel drei, aufweisenden Bandträgers kann ohne weiteres, während das Band läuft, ausgetauscht werden. Es ist bei ihr auch ohne Schwierigkeit möglich, die eine Stirnwand zurückzuversetzen und in dem so geschaffenen Hohlraum auf der Rollenachse den Sensor und Impulsgeber anzubringen, so daß die Impulserzeugung an geschützter Stelle stattfindet und die Störanfälligkeit dementsprechend gemindert ist. Die Halterung des Sensors und Impulsgebers auf der Rollenachse, für die die Zurückversetzung der Stirnwand den Platz schafft, macht alle der Impulserzeugung dienenden Teile zu einer Baueinheit mit der Rolle.

Im Vergleich zur Anordnung des Impulserzeugers und des Sensors und Impulsgebers an einer Umkehrrolle, die immer die Abwurfstelle des Bandes bildet oder nahe der Beladungsstelle des Bandes liegt, befindet sich darüber hinaus die neue Anordnung des Impulserzeugers und des Sensors und Impulsgebers an einer normalen Bandrolle, in der Regel des Oberbandes, an einer Stelle geringerer Staubentwicklung und Verschmutzung.

Im Vergleich zu dem anderen erwähnten bekannten Bandwächter ist über die Montagevereinfachung hinaus die Störanfälligkeit durch den Wegfall aller Kontakte verringert.

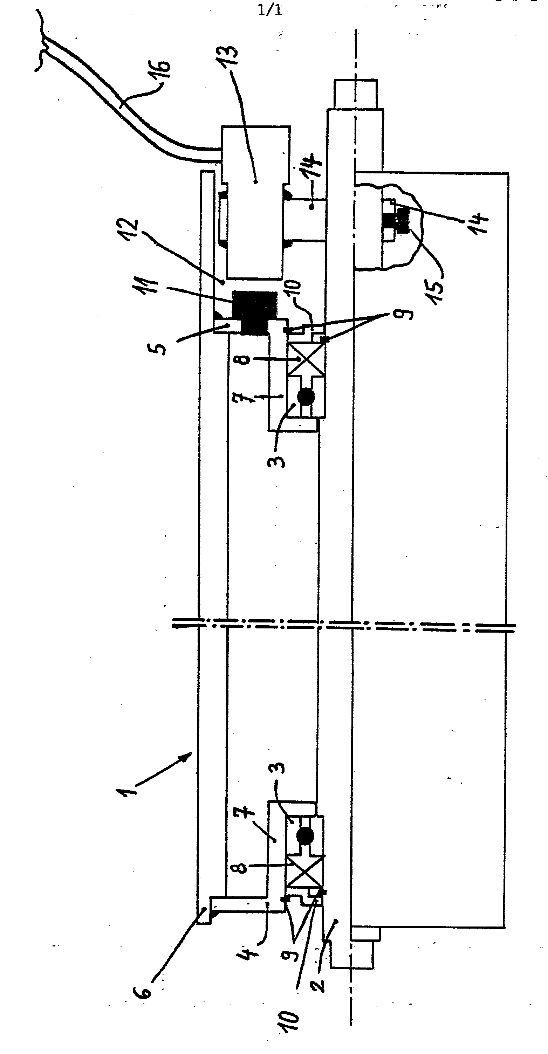

Die Zeichnung gibt ein Ausführungsbeispiel der Erfindung wieder.

Sie zeigt einen Längsschnitt durch eine Bandrolle.

0165506

In einem drei winklig zueinander angeordnete Bandrollen aufweisenden Bandträger des oberen Trumes eines Förderbands ist als äußere Rolle die dargestellte Bandrolle 1 angeordnet.

Sie weist auf einer feststehenden Achse 2 einen über Kugellager 3 und Stirnwände 4 und 5 drehbar gelagerten Rollenmantel 6 auf. Die Stirnwände 4 und 5 sind in der Mitte derart eingestülpt, daß hier eine Büchse 7 gebildet ist, in der jeweils das Kugellager 3 angeordnet und durch eine Dichtpackung 8 geschützt ist; diese ist durch einen von einem Seegering 9 gehaltenen Dichtring 10 abgedeckt.

Die Stirnwand 5 ist gegenüber dem einen Ende der Bandrolle 1 nach innen zurückversetzt und trägt einen etwa zylindrischen impulserzeugenden Metallkörper 11. In dem durch die Zurückversetzung entstandenen Raum 12 ist ein dem impulserzeugenden Metallkörper 11 zugeordneter Sensor und Impulsgeber 13 angeordnet. Er sitzt in einer Halterung 14, die ihrerseits auf der Achse 2 mittels einer Klemmschraube 15 befestigt ist. Eine Leitung 16 führt von dem Sensor und Impulsgeber 13 zu einem Drehzahlüberwachungsgerät.

Der mit der Bandrolle drehende impulserzeugende Metallkörper 11 erzeugt bei jedem Vorbeilauf an dem Sensor und Impulsgeber 13 einen Impuls, der von dem Drehzahlüberwachungsgerät registriert und in der Weise umgesetzt wird, daß bei einem Abfall der Impulsfrequenz unter einen Schwellwert der Antrieb des Förderbandes und die Antriebe aller zufördernden Förderbänder abgeschaltet werden und ein Signal gegeben wird.

Kobenhüttenweg 43, 6600 Saarbrücken

Telefon (0681) 65000

**0165506**

- 1 -

Patentanspruch:

1. Vorrichtung zur Bewegungsüberwachung eines Förderbandes aus einem an einer Förderbandrolle mitumlaufenden, auf das magnetische und/oder das elektrische Feld wirkenden Impulserzeuger und einem neben dessen Umlaufbahn feststehend angeordneten Sensor als Impulsgeber für ein an ihn angeschlossenes Überwachungsgerät zum Auslösen eines Signals und/oder zum Abschalten von Anlageteilen, insbesondere von zufördernden Förderbändern, dadurch gekennzeichnet, daß eine Rolle (1) eines auf einem Bandquerschnitt eine Mehrzahl von Rollen aufweisenden Bandträgers eine nach innen zurückversetzte Stirnwand (5) aufweist und daß an dieser der Impulserzeuger (11) und in dem von dem Rollenmantel (6) umschlossenen Raum (12) vor ihr der Sensor und Impulsgeber (13) angeordnet ist, der mittels einer Halterung (14) auf der Rollenachse (2) befestigt ist.

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 85106435.2 |
| A | DD - A - 132 115 (VEB)<br><br>* Seite 2, Zeile 31; Seite 4, letzter Absatz *<br><br>-- | 1 | B 65 G 43/00 |
| A | DE - A1 - 2 807 173 (KUPP)<br><br>* Anspruch 1 *<br><br>---- | | |

**RECHERCHIERTE SACHGEBIETE (Int. Cl.4)**

B 65 G

G 01 P

Der vorliegende Recherchenbericht wurde für alle Patentansprüche erstellt.

| Recherchenort | Abschlußdatum der Recherche | Prüfer |
|---|---|---|
| WIEN | 13-09-1985 | BAUMGARTNER |